# EUROPEAN PATENT APPLICATION

(11) **EP 4 383 127 A1**
(43) Date of publication of application: **12.06.2024**
(21) Application number: 23206802.3
(22) Date of filing: 30.10.2023
(51) Int. Cl.: G06K 19/07, G06Q 10/0833, G06Q 10/087, G06Q 10/0875, G06Q 10/10, G06Q 30/0601, G06Q 50/04, H04W 4/02, H04W 4/029, H04W 4/35, H04W 4/38, H04W 4/80

(54) **STANDARDIZED ASSET LOCATION TRACKING**

(30) Priority: 06.12.2022 US 202218062570
(71) Applicant: The Boeing Company, Arlington, VA 22202 (US)
(72) Inventor: RAMESH, Parikshanth, 22202 Arlington (US); VERMA, Jeetendra, 22202 Arlington (US); SIVADURAI, Sindhuja, 22202 Arlington (US); SHARMA, Brij Mohan, 22202 Arlington (US); ADGAONKAR, Sameeran Prashant, 22202 Arlington (US); PIPPEN, Brian W., 22202 Arlington (US); KILLELEA, Elizabeth, 22202 Arlington (US)
(74) Representative: Morrall, Jonathan Ian McLachlan

(57) **Abstract**

An information handling system (IHS), method and computer program product enables expeditious, scalable, and distributable asset location tracking in an enterprise using both passive radio frequency identification (RFID) technology and wireless communication to RFID tags. A controller of the IHS determines available source(s) of location data for a particular RFID tag from: (i) location data included in the RFID data; (ii) signal strength and direction data detected by a corresponding RFID sensor; and (iii) information indicating the zone sensed by the corresponding RFID sensor. The controller generates a standardized RFID event including a location defined in a standard spatial coordinate system in response to the one or more available sources of location data.

## Description

### TECHNICAL FIELD

The present disclosure relates generally to radio frequency identifier (RFID) tag detection, and more particularly to location tracking and reporting of passive and active RFID tag detection events for asset location management.

### BACKGROUND

Businesses rely upon asset tracking such as inventory parts, tools, and kits to control inventory costs and to ensure an ongoing ability to provide goods and services that use the tracked assets. Automating asset tracking can be necessary in supporting asset tracking within large enterprises with many assets whose locations are dynamically changed on a frequent basis. Conventional automated systems use passive radio frequency identification (RFID) tags that are attached to assets. An RFID reader or interrogator transmits an interrogation signal that activated the passive RFID tags and then receive a response from the passive RFID tags. With increasing implementation of industrial internet of things (IIoT), active RFID tags are being incorporated into industrial processes that are capable of wirelessly communicating using low power communication protocols such as ultrawide band (UWB) and Bluetooth low energy (BLE). Sensors configured for wireless communication are used to check the status of the IIoT active RFID tags.

Certain businesses, such as vehicle production, coordinate a large enterprise of inventory storage locations and factory workspaces to produce a product. Conventional asset tracking systems provide little applicability to these environments. The different types of sensors for passive RFID tags and IIoT active RFID tags have to be processed separately and queried by separate asset management systems. Attempts have been made to create a monolithic system that is capable of receiving RFID events, determining locations respectively of each RFID, and maintaining changes in location of particular assets. The result is a system that requires extensive customization for each location. The result also is a system that has such a large lag in tracking as to make the information not usable for a number of management functions.

### SUMMARY

In one aspect of the present disclosure, an information handling system (IHS) includes one or more radio frequency identification (RFID) sensors configured to be placed within a respective zone, for each zone, a RFID sensor configured to interrogate an RFID tag. The HIS system further includes a network interface communicatively connected over a network to an asset tracking system, and a memory that stores a location-based service (LBS) middleware application. The IHS system also includes a controller communicatively coupled to the RFID sensor, the network interface, and the memory. At least one hardware processor executes the LBS middleware application, causing the at least one hardware processor to perform the following operations: receiving one or more RFID events from the RFID sensor; for each of the one or more RFID events: determining the RFID for a corresponding particular RFID tag; determining one or more available sources of location data for the particular RFID tag selected from a group comprising: location data included in RFID data; signal strength and direction data detected by a corresponding RFID sensor; and information indicating a zone sensed by a corresponding RFID sensor; generates a standardized RFID event including the one or more available sources of location data; and based at least on the standardized RFID event, associating the RFID and the one or more available sources of location data with a tracked asset.

In another aspect of the present disclosure, a method includes a method including receiving, by a first RFID sensor of one or more RFID sensors, a first RFID event from a passive RFID tag in response to RFID interrogation in a first zone. The method includes receiving, by a second RFID sensor of the one or more RFID sensors, a second RFID event communicated within a second zone using a wireless communication protocol. For each RFID event, the method includes determining an RFID for a corresponding particular RFID tag of one of the passive RFID tag and the active RFID tag. The method includes determining one or more available sources of location data for the particular RFID tag selected from a group comprising: (i) location data included in the RFID data; (ii) signal strength and direction data detected by a corresponding RFID sensor; and (iii) information indicating the zone sensed by the corresponding RFID sensor. The method includes generating a standardized RFID event including the one or more available sources of location data. The method includes communicating the standardized RFID event, via the network interface, to the asset management system for associating the RFID and the one or more available sources of location data with a tracked asset.

In an additional aspect of the present disclosure, a computer readable storage media comprising computer-executable instructions that, when executed by a processor, cause the processor to perform the following operations: receiving, by a first RFID sensor of one or more RFID sensors, a first RFID event from a passive RFID tag in response to RFID interrogation in a first zone. The functionality includes receiving, by a second RFID sensor of the one or more RFID sensors, a second RFID event communicated within a second zone using a wireless communication protocol. For each RFID event, the functionality includes determining an RFID for a corresponding particular RFID tag of one of the passive RFID tag and the active RFID tag. The functionality includes determining one or more available sources of location data for the particular RFID tag selected from a group comprising: (i) location data included in the RFID data; (ii) signal strength and direction data detected by a corresponding RFID sensor; and (iii) information indicating the zone sensed by the corresponding RFID sensor. The functionality includes generating a standardized RFID event including the one or more available sources of location data. The functionality includes communicating the standardized RFID event, via the network interface, to the asset management system for associating the RFID and the one or more available sources of location data with a tracked asset.

These and other features are explained more fully in the embodiments illustrated below. It should be understood that in general the features of one embodiment also may be used in combination with features of another embodiment and that the embodiments are not intended to limit the scope of the invention.

### BRIEF DESCRIPTION OF THE DRAWINGS

The various exemplary embodiments of the present invention, which will become more apparent as the description proceeds, are described in the following detailed description in conjunction with the accompanying drawings, in which:
**FIG. 1** depicts a simplified functional block diagram of an information handling system (IHS) that generates standardized radio frequency identification (RFID) events from different RFID events received via RFID sensors from both passive and active RFID tags, according to one or more embodiments;
**FIG. 2** depicts a simplified functional block diagram of an asset location management environment facilitated and managed by enterprise IHS **202** that is comprised of a multiple IHSes of **FIG. 1**, according to one or more embodiments;
**FIG. 3** depicts a block diagram of deploying an industrial internet of location (I2L) platform in the enterprise IHS system of **FIG. 2**, including a development layer, to a cloud and edge deployments and integration with other systems and bedrock services, according to one or more embodiments;
**FIG. 4** depicts functional block diagram of a fully deployed I2L platform in an example enterprise IHS system, according to one or more embodiments;
**FIG. 5** presents a flow diagram of a method for expeditious, scalable, and distributable asset location tracking in an enterprise using both passive radio frequency identification (RFID) technology and wireless communication to active RFID tags, according to one or more embodiments; and
**FIG. 6** presents a flow diagram of a method for using asset location tracking in a time critical scenario, according to one or more embodiments.

### DETAILED DESCRIPTION

According to aspects of the present disclosure, an information handling system (IHS), method and computer program product enable expeditious, scalable, and distributable asset location tracking in an enterprise using both passive radio frequency identification (RFID) technology and wireless communication to active RFID tags. A controller of the IHS determines available source(s) of location data for a particular RFID tag from: (i) location data included in the RFID data; (ii) signal strength and direction data detected by a corresponding RFID sensor; and (iii) information indicating the zone sensed by the corresponding RFID sensor. The controller generates a standardized RFID event including a location defined in a standard spatial coordinate system in response to the one or more available sources of location data. In a particular embodiment, the standard spatial coordinate system is world geodetic system (WGS) 84.

In one or more embodiments, the present disclosure provides location-based services (LBS) middleware that is designed to provide location tracking services to track assets (tools, kits, parts, personnel) primarily using RFID, ultrawide band (UWB), Bluetooth low energy (BLE), IEEE 802.11 wireless technology using passive or active tags. The LBS middleware integrates with information technology (IT) devices and provides a common data format, including latitude and longitude based on WGS 84. The standardized tag locate information is saved in a real-time data historian for use by other services like mobile operations management (MOM) and enterprise resource planning (ERP). The LBS middle may be implemented as an edge and cloud based deployment, where the device communication and data processing happen on the edge and the other control services like device, location, user interface (UI) and other interface services run at the cloud layer. The LBS middleware may be light, just processing tag read events, which enables handling potentially billions of tag read events per week in a large enterprise.

Aspects of the disclosure provide solutions for location tracking services to track assets. Aspects of the disclosure have a technical effect of improved operation of a computing, for example by reducing lag in tracking, improving the efficiency of computational hardware, and provide better allocation of resources, as compared to traditional systems. For example, aspects herein improve the operation of a computer by reducing the computation time (e.g., speed improvement). For example, aspects of the disclosure enable the use of a standard format, such as WGS 84, to locate assets without having to convert location to suit particular locations/maps. Further, aspects of the disclosure reduce or eliminate a need to require extensive customization for each location.

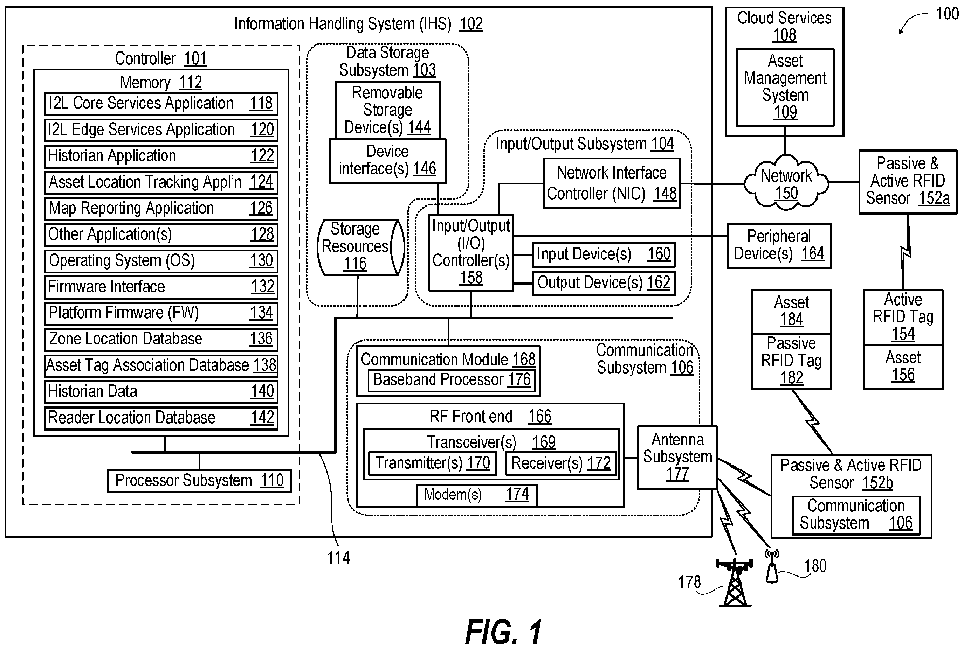

Turning to the Drawings, **FIG. 1** depicts a functional block diagram of enterprise IHS environment **100** that includes IHS **102** managed by controller **101**, that performs at least a portion of location-based tracking by configuring data storage subsystem **103**, input/output subsystem **104** and communication subsystem **106**. Cloud services **108** of enterprise IHS environment **100** provides asset management system **109** for backend processing and distribution of location-based services. Within the general context of IHSs, IHS **102** may include any instrumentality or aggregate of instrumentalities operable to compute, classify, process, transmit, receive, retrieve, originate, switch, store, display, manifest, detect, record, reproduce, handle, or utilize any form of information, intelligence, or data for business, scientific, control, entertainment, or other purposes. For example, IHS **102** may be a server, blade server, rack-mounted server, rack-mounted data storage, or other rack-mounted IT equipment in a data center. IHS **102** may include random access memory (RAM), one or more processing resources such as a central processing unit (CPU) or hardware or software control logic, read only memory (ROM), and/or other types of nonvolatile memory. Additional components of the IHS **102** may include one or more disk drives, one or more network ports for communicating with external devices as well as various input and output (I/O) devices, such as a keyboard, a mouse, and a video display. The IHS **102** may also include one or more buses operable to transmit communications between the various hardware components.

Controller **101** includes processor subsystem **110** communicatively coupled to memory **112**. Processor subsystem **110** is coupled to memory **112** via system interconnect **114**. System interconnect **114** can be interchangeably referred to as a system bus, in one or more embodiments. System interconnect **114** may represent a variety of suitable types of bus structures, e.g., a memory bus, a peripheral bus, or a local bus using various bus architectures in selected embodiments. For example, such architectures may include, but are not limited to, Micro Channel Architecture (MCA) bus, Industry Standard Architecture (ISA) bus, Enhanced ISA (EISA) bus, Peripheral Component Interconnect (PCI) bus, PCI-Express bus, HyperTransport (HT) bus, and Video Electronics Standards Association (VESA) local bus. For the purpose of this disclosure, system interconnect **114** can also be a Double Data Rate (DDR) memory interface. Memory **112** can either be contained on separate, removable dual inline memory module (RDIMM) devices or memory **112** can be contained within persistent memory devices (NVDIMMs). For example, the NVDIMM-N variety of NVDIMMs contain both random access memory, which can serve as memory **112**, and non-volatile memory. It should be noted that other channels of communication can be contained within system interconnect **114**, including but not limited to inter-integrated circuit (i2c) or system management bus (SMBus). System interconnect **114** communicatively couples various system components. Examples of system components include local storage resources **116** of data storage subsystem **103** that are replaceable such as solid state drives (SDDs) and hard disk drives (HDDs). Software and/or firmware modules and one or more sets of data that can be stored on local storage resources **116** and be utilized during operations of IHS **102**. Specifically, in one embodiment, memory **112** can include therein a plurality of such modules, including industrial internet for location (I2L) core services application **118**, I2L edge services application **120**, historian application **122**, asset location tracking application **124**, map reporting application **126**, and other application(s) **128**. Memory **112** can also store operating system (OS) **130**, firmware interface **132** such as basic input/output system (BIOS) or Uniform Extensible Firmware Interface (UEFI), and platform firmware (FW) **134**. These software and/or firmware modules have varying functionality when their corresponding program code is executed by processor subsystem **110** or secondary processing devices within IHS **102**. Memory **112** can include computer data structures and data values such as zone location database **136**, asset tag association database **138**, historian data **140**, and reader location database **142** used by applications (**118**, **120**, **122**, **124**, **126**, **128**).

Data storage subsystem **103** of IHS **102** includes local storage resources **116**. Controller **101** is communicatively connected, via system interlink **114**, to local storage resources **116**. Data storage subsystem **103** provides applications, program code, such as computer-executable instructions on computer-readable media that is accessible by controller **101**. For example, data storage subsystem **103** can provide a selection of applications and computer data such as I2L edge services application **120** and other application(s) **128** that use asset location tracking services. These applications can be loaded into device memory **112** for execution by controller **101**. In one or more embodiments, local storage resources **116** can include hard disk drives (HDDs), optical disk drives, and/or solid-state drives (SSDs), etc. Data storage subsystem **103** can include removable storage device(s) (RSD(s)) **144**, which is received in RSD interface **146**. Controller **101** is communicatively connected to RSD **144**, via system interlink **114** and RSD interface **146**. In one or more embodiments, RSD **144** is a non-transitory, physical computer program product or computer readable storage device. Controller 101 can access data storage device(s) 116 or RSD 144 to provision communication device 100 with program code, such as code for one or more of video conference application 114 and other application(s) 116.

Computer storage media include volatile and non-volatile, removable and non-removable, media implemented in any method or technology for storage of information such as computer readable instructions, data structures, program modules or the like. Computer storage media include, but are not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing apparatus. Computer storage media are tangible, non-transitory, and mutually exclusive to communication media. In contrast to computer storage media, communication media embody computer readable instructions, data structures, program modules, and/or the like in a modulated data signal, such as a carrier wave and/or other transport mechanism. Therefore, a computer storage medium should not be interpreted to be a propagating signal per se. Propagated signals per se are not examples of computer storage media.

Input/Output subsystem **104** includes a network interface, depicted as network interface controller (NIC) **148**. NIC **126** is communicatively connected via a network **150** to other IHSes and remote devices within enterprise IHS **100** such as cloud services **108**. NIC **148** enables IHS **102** and/or components within IHS **102** to communicate and/or interface with other devices, services, and components that are located external to IHS **102**. In an example, passive and active RFID sensor **152a** is communicatively coupled to network **150** and is within sensing range of active RFID tag **154** attached to asset **156**. Examples of asset **156** include an inventory part, a tool, a person, etc. These devices, services, and components can interface with IHS **102** via an external network, such as network **150**, using one or more communication protocols that include transport control protocol (TCP/IP) and network block device (NBD) protocol. Network **150** can be a local area network, wide area network, personal area network, and the like, and the connection to and/or between network **150** and IHS **102** can be wired, wireless, or a combination thereof. For purposes of discussion, network **150** is indicated as a single collective component for simplicity. However, it should be appreciated that network **150** can comprise one or more direct connections to other devices as well as a more complex set of interconnections as can exist within a local area network or a wide area network, such as the Internet.

Input/Output subsystem **104** further includes one or more input/output (I/O) controllers **158** that support connection by and processing of signals from one or more connected input device(s) **160**, such as a keyboard, mouse, touch screen, or microphone. I/O controllers **158** also support connection to and forwarding of output signals to one or more connected output device(s) **162**, such as a monitor or display device or audio speaker(s). I/O controllers **158** can provide a communication interface to peripheral devices **164**. In one or more embodiments, IHS **102** operates autonomously without direct user interfaces provided by input and output devices **160** and **162**. Additionally, in one or more embodiments, one or more device interfaces **154**, such as an optical reader, a universal serial bus (USB), a card reader, Personal Computer Memory Card International Association (PCMCIA) slot, and/or a highdefinition multimedia interface (HDMI), can be associated with IHS **102**. RSD interface(s) **146** can be utilized to enable data to be read from or stored to corresponding removable storage device(s) **144**, such as a compact disk (CD), digital video disk (DVD), flash drive, or flash memory card. In one or more embodiments, device interface(s) **154** can further include general purpose I/O interfaces such as inter-integrated circuit (I²C), system management bus (SMB), and peripheral component interconnect (PCI) buses.

Communication subsystem **106** of communication device **100** enables over-the-air (OTA) communication with external communication systems. Communication subsystem **106** includes radio frequency (RF) frontend **166** and communication module **168**. RF frontend **166** includes transceiver(s) **169**, which includes transmitter(s) **170** and receiver(s) **172**. RF frontend **166** further includes modem(s) **174**. Communication module **168** of communication subsystem **106** includes baseband processor **176**. Baseband processor **176** communicates with controller **101** and RF frontend **166**. Baseband processor **176** operates in baseband frequency range to encode data for transmission and decode received data, according to a communication protocol. Modem(s) **174** modulate baseband encoded data from communication module **168** onto a carrier signal to provide a transmit signal that is amplified by transmitter(s) **170**. Modem(s) **174** demodulates each signal received from external communication system detected by antenna subsystem **177**. The received signal is amplified and filtered by receiver(s) **172**, which demodulate received encoded data from a received carrier signal.

In one or more embodiments, controller **101**, via communication subsystem **106**, performs multiple types of over-the-air (OTA) or wireless communication using one or more IEEE 802.11 wireless local area network (WLAN), an OTA ad hoc network, personal access network (PAN), wireless industrial fieldbus networks, etc. Examples of PAN include such as Bluetooth low energy (BLE) and ultrawide band (UWB). Communication subsystem **106** can also support wireless connection to base node **178** for connecting to a cellular carrier or access node **180** for connecting to a wireless wide area network (WWAN). Controller **100**, via communication subsystem **106**, communicatively connects to passive and active RFID sensor **152b**, which also has communication sensor **106**, either directly via an ad hoc network of PAN or via one of base node **178** and access node **180**. passive and active RFID sensor **152b** relays RFID events such as from passive RFID tag **182** that is attached to asset **184**. In one or more embodiments, communication subsystem **106** of IHS **102** can function as passive and active RFID sensor **152b**.

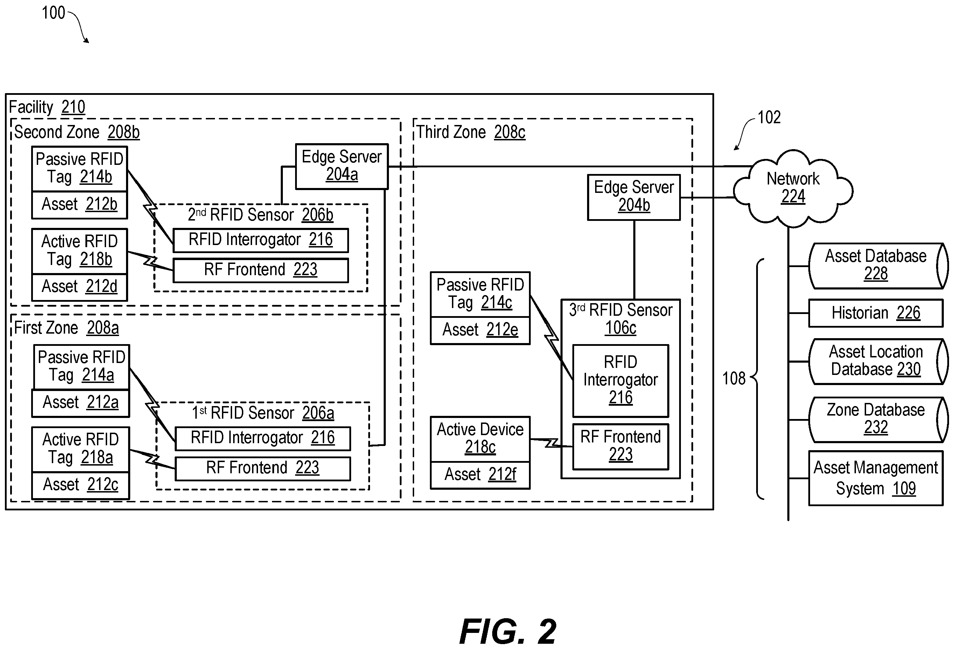

**FIG. 2** depicts a simplified functional block diagram of an asset location management environment **200** facilitated and managed by enterprise IHS **100** that is comprised of a multiple IHSes **102** of **FIG. 1**. In an example, one or more edge servers **204a** - **204b** are implementations respectively of IHS **102** (**FIG. 1**) and can have identical or similar components. Cloud services **108** is similarly implemented by a number of IHS **102** (**FIG. 1**) and configured to operate as network components in data centers and similar configurations. Edge servers **204a** - **204b** communicate with one or more RFID sensors **206a** - **206c** that may be at a fixed or mobile location within respective zones **208a** - **208c** in facility **210**. For clarity, three zones **208a**, **208b**, and **208c** are depicted with first zone **208a** below second zone **208b** and third zone **208c** laterally offset from both first and second zones **208a** - **208b**. Edge server **204a** supports both RFID sensors **206a** - **206b** respectively in first and second zones **208a** - **208b.** Second edge server **204b** supports third RFID sensor **206c** in third zone **208c**. Third RFID sensor **206c** includes integral RFID interrogator **216** that detects passive RFID tag **214c** on asset **212e** and. RF frontend **223** that detects active RFID tag **218c** on asset **212f**.

IHS **202** supports location-based tracking for different types of over-the-air reporting technologies. In one or more embodiments, assets **212a** - **212b** having respective passive RFID tags **214a** - **214b**. RFID sensors **206a** - **206b** each include respective RFID interrogator **216** that can read passive RFID tags **214a** - **214b**. In one or more embodiments, assets **212e** - **212d** include active RFID tags **218a** - **218b** that are configured to wirelessly communicate identification information. In an example, active RFID tags **218a** - **218b** are an attached tag having stored power sufficient to support communication in a low power communication protocol such as ultrawide band (UWB) or Bluetooth low energy (BLE). In another example, active RFID tags **218a** - **218b** are integral components or functions of assets **212e** - **212d**. For example, assets **212e** - **212d** are IIoT industrial sensors that provide a sensed measurement via wireless communication by respective active RFID tags **218a** - **218b** to wireless fieldbus **220** monitored by industrial controller **222**. RFID sensors **206a** - **206b** each include respective RF frontend **223** that can interface to wireless fieldbus **220** or directly to active RFID tags **218a** - **218b** to receive RFID events via wireless communication.

In an example, RFID sensors **206a** - **206b** detect a signal direction in a horizontal X-Y plane. Z-axis vertical direction is only identified as being within a reception range of respective RFID sensors **206a** - **206b**, such as respectively first and second zones **208a** - **208b**. In another example, third RFID sensor **206c** has vertical direction sensing in the Z-axis to identify a more granular location of a received signal in third zone **208c**. Distance from respective RFID sensors **206a** - **206c** may be determined based on peak received signal strength indicator (RSSI). In an additional embodiment, RFID sensors **206a** - **206c** may determine location of a particular RFID tag that is self-reported.

Controllers **101** (**FIG. 1**) of edge servers **204a** - **204b** receive two or more data formats of RFID events from passive RFID tags **214a** - **214b** and active RFID tags **218a** - **218b**. In one or more embodiments, controllers **101** (**FIG. 1**) convert each RFID event into a common, standardized RFID event such as the following:

| | |
|---|---|
| • { | |
| • "epcCode": "Tag-12", | «Tag Id» |
| • "peakRSSI": -90.0, | <<Passive read strength>> |
| • "firstSeenTimestamp": 1600682630709000, | <<Time stamp>> |
| • "hostName": "Reader-4", | <<Reader name>> |
| • "antennaPort": 1, | <<Reader antenna port>> |
| • "x": 0.0, | <<active reader positions>> |
| • "y": 0.0, | <<active reader positions>> |
| • "z": 0.0, | <<active reader positions>> |
| • "location": { | <<location mapped to the reader>> |
| • "id": "Zone-1", | |
| • "site": "Zone-1-site", | |
| • "building": "Zone-1-building", | |
| • "floor": " 1 ", | |
| • "name": "Zone-1" | |
| • } | |
| • } | |

Edge servers **204a** - **204b** communicate the standardized RFID events via network **224** to cloud services **108**. In one or more embodiments, asset management system **109**, which is part of cloud services **108**, maintains and uses information to associate the RFID events with assets and location. In an example, asset management system **109** accesses current RFID events in historian **226** and accesses the associated information in

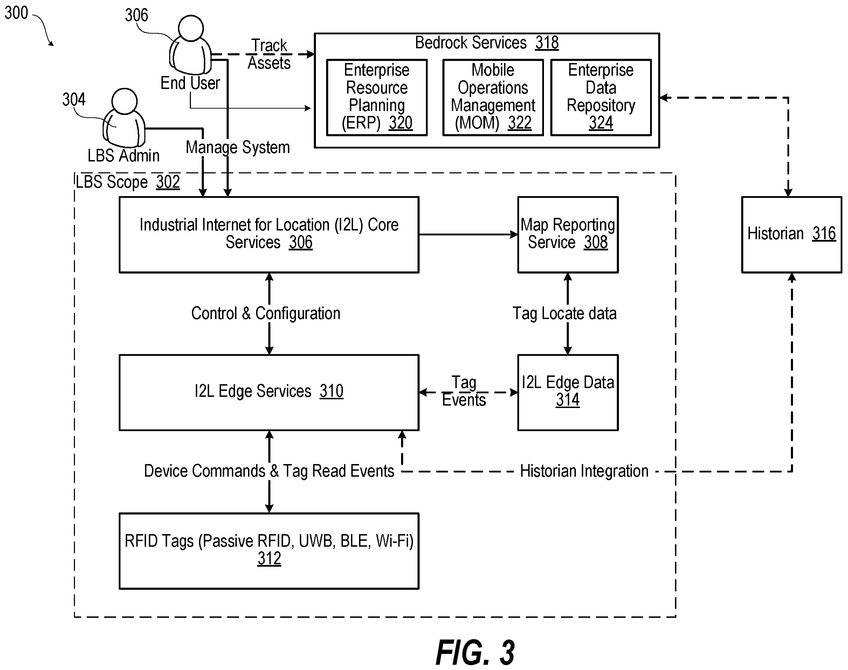

**FIG. 3** depicts a block diagram of industrial internet of location (I2L) platform **300** in enterprise IHS **100** of **FIG. 2**, deployed from a development layer to a cloud and edge deployments and integration with other systems and bedrock services. LBS scope **302** is managed by LBS administrator **304** and end user **306** via I2L core services **306** that is integrated with map reporting service **308**. I2L core services **306** exchanges control and configuration settings with I2L edge services **310** that provide device commands and receive tag read events from RFID from devices such as RFID tags **312** via passive RFID interrogation, UWB communication, BLE communication or 802.11 wireless communication. An example of 802.11 wireless communication is Wi-Fi^{™} communication. I2L edge services **310** I2Lprocesses tag events to become standardized edge data **314** that is further analyzed to refine tag locate data for map reporting service **308**. Historian **316** is integrated with LBS scope **302** to maintain current standardized edge data **314**. Bedrock services **318** is a consumer of standardized edge data **314** from historian **316**. Bedrock services **318** includes enterprise resource planning **320**, mobile operations management (MOM) **322**, and enterprise data repository **324**. End user **306** tracks assets via bedrock services **318**.

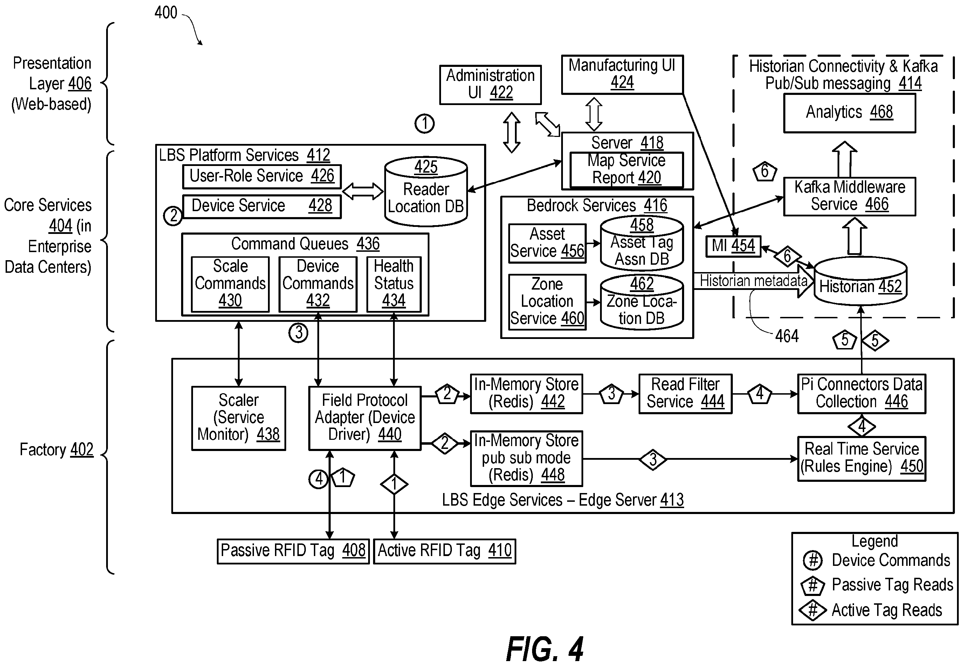

**FIG. 4** depicts functional block diagram of a fully deployed I2L platform in example enterprise IHS system **400** distributed across factory layer **402**, core services layer **404** implemented in enterprise data centers, and a presentation layer **406** that is web-based. Passive RFID tags **408** and active RFID tags **410** are stored in or pass through factory layer **402**. At factory level **402**, edge servers **410** provide LBS edge services in part by reading RFID events from passive RFID tags **408** and active RFID tags **410**. At core services layer **404**, LBS platform services **412** provide commands to edge servers **413** at factory level **402**. Historian connectivity and Kafka pub/sub messaging system **414** at core services layer **404** receives RFID event data from edge servers **413** of factory level **402** and interacts with bedrock services **416** of core services layer **404**. Server(s) **418** at core services layer **404** support map report service **420** that provides information to administration user interface (UI) **422** and manufacturing UI **424** of presentation layer **406**. LBS platform services **412** includes reader location database **425** to map report service **420**.

In an example, administration UI **422** provides a web single sign-on (WSSO) via WordPress OAuth 2.0 Client as device command #1 that is relayed to user-role service **426** and device service **428** of LBS platform services **412**. Device command #2 in advanced messaging queuing protocol (AMQP) from device service **428** generates scale commands **430**, device commands **432**, and health status **434** in communication queues **436** as device commands #3. Edge servers **410** in factory layer **402** provide LBS edge services that include scaler **438**, such as by a service monitor that receives scale commands **430** and field protocol adapter **440** such as by a device driver that enables communication with passive RFID tags **408** and active RFID tags **410** as device commands #4. Passive RFID tags **408** respond with passive tag reads #1 and active RFID tags **410** respond with active tag reads #1 to field protocol adapter **440**. Field protocol adapter **440** communicates passive RFID tag reads #3 to in-memory store **442**, such as provided by Redix and then through read filter service **444** to throttle and remove duplicates before being passed as passive RFID tag reads #4 to Pi connectors data collection **446**. Field protocol adapter **440** communicates active RFID tag reads #3 to in-memory store pub sub mode **448**, such as provided by Redix that is passed to real time service **450** that performs a rule engine before passing as active RFID tag read #4 to Pi connectors data collection **446**. Pi connectors data collection **446** passes passive and active RFID tag reads #5 to historian **452** of historian connectivity and Kafka pub/sub messaging system **414**. Historian can be a tradeoff between a local historian versus an enterprise historian or a local web socket client. Manufacturing information (MI) **454** from manufacturing UI **424** as active RFID tag reading #6 in real-time PI AF SDK to historian **452**. PI AF SDK is the foundational.NET-based software development kit for interacting with asset metadata and time series data stored in the PI Asset Framework. Bedrock services **416** includes asset service **456** that manages asset tag association database **458** and zone location service **460** that manages zone location database **462** and provides historian metadata **464** to historian **452**. Historian can be configured to use the same instance of asset metadata as in bedrock services **416**. Historian **452** passes near real time data to Apache Kafka middleware service **466**, which is an event driven streaming platform of historian connectivity and Kafka pub/sub messaging system **414**. Passive RFID tag read #6 passes between Kafka pub/sub messaging system **414** and bedrock services **416**. Kafka middleware service **466** passes near real time Kafka publications to other bedrock services and enterprise manufacturing analytics **468**,

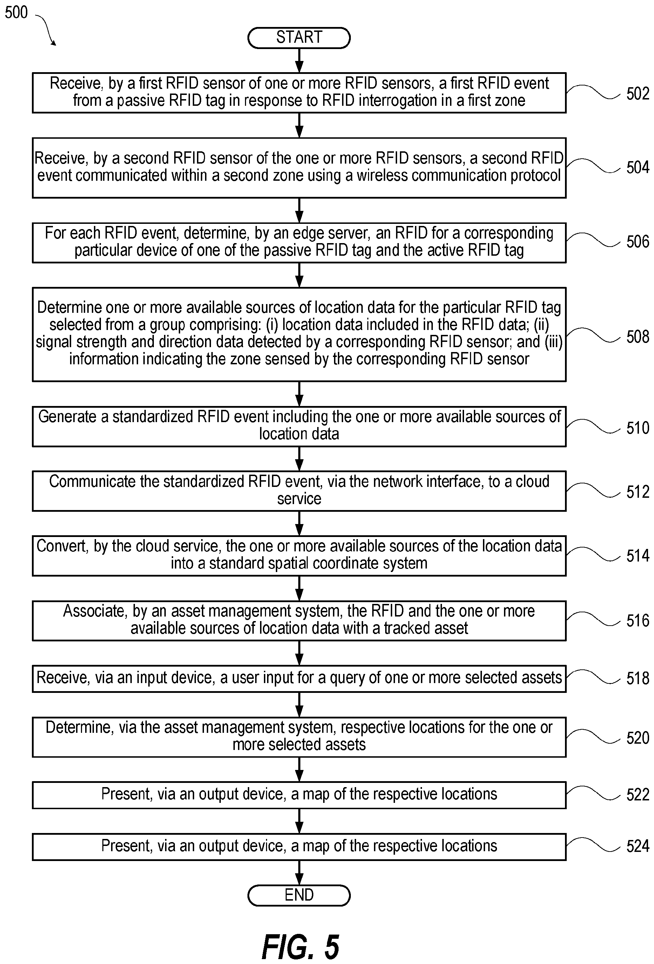

**FIG. 5** presents a flow diagram of method **500** for expeditious, scalable, and distributable asset location tracking in an enterprise using both passive RFID technology and wireless communication to active RFID tags. In one or more embodiments, controller **101** configures IHS **102** (**FIG. 1**) to perform the functionality of method **500**. Components described with regard to **FIGs. 1 - 4** and referenced in method **500** can be identical or similar. Method **500** includes receiving, by a first RFID sensor of one or more RFID sensors, a first RFID event from a passive RFID tag in response to RFID interrogation in a first zone (block **502**). Method **500** includes receiving, by a second RFID sensor of the one or more RFID sensors, a second RFID event communicated within a second zone using a wireless communication protocol (block **504**). In an example, the first RFID sensor and the second RFID sensor may be integrated in one device. The first zone may be the same as the second zone. The wireless communication protocol(s) may be at least one of IEEE 802.11 wireless, ultrawide band (UWB) and Bluetooth low energy (BLE). Method **500** includes, for each RFID event, determining, by an edge server, an RFID for a corresponding particular device of one of the passive RFID tag and the active RFID tag (block **506**). In an example, the edge server parses a lightweight computer data interchange format such as Json, short for JavaScript Object Notation, for substrings that correspond to the RFID, the location of the particular device; and identifier for a corresponding RFID sensor. Method **500** includes determining one or more available sources of location data for the particular device selected from a group comprising: (i) location data included in the RFID data; (ii) signal strength and direction data detected by a corresponding RFID sensor; and (iii) information indicating the zone sensed by the corresponding RFID sensor (block **508**). Method **500** includes generating a standardized RFID event including the one or more available sources of location data (block **510**). Method **500** includes communicating the standardized RFID event, via the network interface, to a cloud service (block **512**). Method **500** includes converting, by the cloud service, the one or more available sources of the location data into a standard spatial coordinate system (block **514**). In one or more embodiments, the standard spatial coordinate system is world geodetic system (WGS) 84. Method **500** includes associating, by an asset management system, the RFID and the one or more available sources of location data with a tracked asset (block **516**). Method includes receiving, via an input device, a user input for a query of one or more selected assets (block **518**). Method **500** includes determining, via the asset management system, respective locations for the one or more selected assets (block **520**). Method **500** includes presenting, via an output device, a map of the respective locations (block **522**). Then method **500** ends.

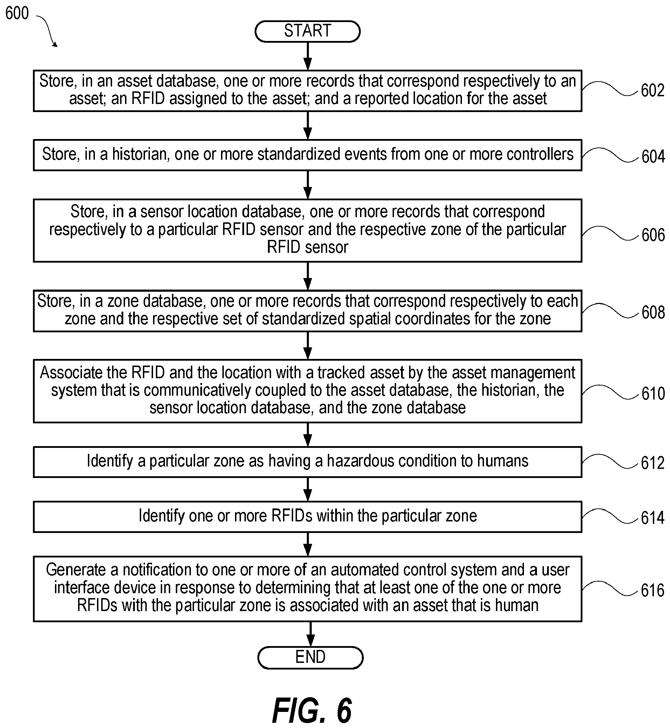

**FIG. 6** presents a flow diagram of method **600** for using asset location tracking in a time critical scenario. In one or more embodiments, controller **101** configures IHS **102** (**FIG. 1**) to perform the functionality of method **600**. Components described with regard to **FIGs. 1 - 5** and referenced in method **600** can be identical or similar. Method **600** includes storing, in an asset database, one or more records that correspond respectively to an asset; an RFID assigned to the asset; and a reported location for the asset (block **602**). Method **600** includes storing, in a historian, one or more standardized events from one or more controllers (block **604**). Method **600** includes storing, in a sensor location database, one or more records that correspond respectively to a particular RFID sensor and the respective zone of the particular RFID sensor (block **606**). Method **600** includes storing, in a zone database, one or more records that correspond respectively to each zone and the respective set of standardized spatial coordinates for the zone (block **608**). Method **600** includes associating the RFID and the location with a tracked asset by the asset management system that is communicatively coupled to the asset database, the historian, the sensor location database, and the zone database (block **610**). Method **600** includes identifying a particular zone as having a hazardous condition to humans (block **612**). Method **600** includes identifying one or more RFIDs within the particular zone (block **614**). Method **600** includes generating a notification to one or more of an automated control system and a user interface device in response to determining that at least one of the one or more RFIDs with the particular zone is associated with an asset that is human (block **616**). Then method **600** ends.

Although described in connection with the IHS 102, implementations of the disclosure are capable of implementation with numerous other general-purpose or special-purpose computing system environments, configurations, or devices. Implementations of well-known computing systems, environments, and/or configurations that are suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, VR devices, holographic device, and the like. Such systems or devices accept input from the user in any way, including from input devices such as a keyboard or pointing device, via gesture input, proximity input (such as by hovering), and/or via voice input.

Implementations of the disclosure are described in the general context of computer-executable instructions, such as program modules, executed by one or more computers or other devices in software, firmware, hardware, or a combination thereof. In one implementation, the computer-executable instructions are organized into one or more computer-executable components or modules. Generally, program modules include, but are not limited to, routines, programs, objects, components, and data structures that perform particular tasks or implement particular abstract data types. In one implementation, implementations of the disclosure are implemented with any number and organization of such components or modules. For example, implementations of the disclosure are not limited to the specific computer-executable instructions or the specific components or modules illustrated in the figures and described herein. Other implementations of the disclosure include different computer-executable instructions or components having more or less functionality than illustrated and described herein. In implementations involving a general-purpose computer, implementations of the disclosure transform the general-purpose computer into a special-purpose computing device when configured to execute the instructions described herein.

By way of example and not limitation, computer readable media comprise computer storage media and communication media. Computer storage media include volatile and nonvolatile, removable, and non-removable memory implemented in any method or technology for storage of information such as computer readable instructions, data structures, program modules, or the like. Computer storage media are tangible, non-transitory, and mutually exclusive to communication media. Computer storage media are implemented in hardware and exclude carrier waves and propagated signals. Computer storage media for purposes of this disclosure are not signals per se. In one implementation, computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium used to store information for access by a computing device. In contrast, communication media typically embody computer readable instructions, data structures, program modules, or the like in a modulated data signal such as a carrier wave or other transport mechanism and include any information delivery media.

The examples disclosed herein are described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples are practiced in a variety of system configurations, including personal computers, laptops, smart phones, mobile tablets, hand-held devices, consumer electronics, specialty computing devices, etc. The disclosed examples are also practiced in distributed computing environments, where tasks are performed by remote-processing devices that are linked through a communications network.

An example information handling system (IHS) comprises: one or more radio frequency identification (RFID) sensors configured to be placed within a respective zone, for each zone, a RFID sensor configured to interrogate an RFID tag and; a network interface communicatively connected over a network to an asset tracking system; a memory that stores a location-based service (LBS) middleware application; a controller communicatively coupled to the RFID sensor, the network interface, and the memory; at least one hardware processor that executes the LBS middleware application, causing the at least one hardware processor to perform the following operations: receiving one or more RFID events from the RFID sensor; for each of the one or more RFID events: determining the RFID for a corresponding particular RFID tag; determining one or more available sources of location data for the particular RFID tag selected from a group comprising: location data included in RFID data; signal strength and direction data detected by a corresponding RFID sensor; and information indicating a zone sensed by a corresponding RFID sensor; generates a standardized RFID event including the one or more available sources of location data; and based at least on the standardized RFID event, associating the RFID and the one or more available sources of location data with a tracked asset.

An example method comprises: receiving, by a first radio frequency (RF) location sensor of one or more RFID sensors, a first radio frequency identification (RFID) event from an RFID tag in response to RFID interrogation in a first zone; receiving, by a second RFID sensor of the one or more RFID sensors, a second RFID event communicated within a second zone using a wireless communication protocol; for each RFID event, determining an RFID for a corresponding particular RFID tag of one of a passive RFID tag and an active RFID tag; determining one or more available sources of location data for the particular RFID tag selected from a group comprising: location data included in the RFID data; signal strength and direction data detected by a corresponding RFID sensor; and information indicating a zone sensed by a corresponding RFID sensor; generating a standardized RFID event including the one or more available sources of location data; and based at least on the standardized RFID event, associating the RFID and the one or more available sources of location data with a tracked asset.

An example Computer readable storage media comprising computer-executable instructions that, when executed by a processor, cause the processor to perform the following operations: receiving, by a first radio frequency (RF) location sensor of one or more RFID sensors, a first radio frequency identification (RFID) event from an RFID tag in response to RFID interrogation in a first zone; receiving, by a second RFID sensor of the one or more RFID sensors, a second RFID event communicated within a second zone using a wireless communication protocol; for each RFID event, determining an RFID for a corresponding particular RFID tag of one of a passive RFID tag and an active RFID tag; determining one or more available sources of location data for the particular RFID tag selected from a group comprising: location data included in the RFID data; signal strength and direction data detected by a corresponding RFID sensor; and information indicating a zone sensed by a corresponding RFID sensor; generating a standardized RFID event including the one or more available sources of location data; and based at least on the standardized RFID event associating the RFID and the one or more available sources of location data with a tracked asset.

Alternatively, or in addition to the other examples described herein, examples include any combination of the following:
- the RFID is a passive RFID tag, and the IHS further comprises a second RFID sensor configured to wirelessly communicate with an active RFID tag that communicate using a wireless communication protocol, each RFID sensor comprising: one or more RF antennas configured to receive RF signals within a respective zone; and an RF frontend configured, via the one or more RF antennas, to perform one or more of the following: interrogate the passive RFID tags for RFID data, to wirelessly communicate with the active RFID tags to receive RFID data during an RFID event, and to relay the RFID data from the RFID event;
- an edge server that generates the standardized RFID event;
- a cloud service communicatively coupled to the edge server, the cloud service configured to: receive the standardized RFID event from the edge server; and convert the one or more available sources of the location data into a standard spatial coordinate system in response to the one or more available sources of location data;
- the standard spatial coordinate system comprises world geodetic system (WGS) 84;
- the RFID sensor and the second RFID sensor are provided by one device;
- the wireless communication protocol comprises at least one of ultrawide band (UWB) and Bluetooth low energy (BLE);
- the controller parses the RFID event comprising a lightweight computer data interchange format for substrings that correspond to the RFID, the location of the particular RFID tag, and identifier for a corresponding RFID sensor;
- an asset database that stores one or more records that correspond respectively to an asset;
- an RFID assigned to the asset, and a reported location for the asset;
- a historian that stores and distributes one or more standardized events from one or more controllers;
- a sensor location database that stores one or more records that correspond respectively to a particular RFID sensor and the respective zone of the particular RFID sensor;
- a zone database that stores one or more records that correspond respectively to each zone and the respective set of standardized spatial coordinates for the zone; and
- an asset management system that is communicatively coupled to the asset database, the historian, the sensor location database, and the zone database for associating the RFID and the location with the tracked asset;
   - the asset management system: identifies a particular zone as having a hazardous condition to humans; identifies one or more RFIDs within the particular zone; and generates a notification to one or more of an automated control system and a user interface device in response to determining that at least one RFID within the particular zone is associated with an asset that is human;
- a map report service;
- a user interface device having an input device and an output device and communicatively coupled to the asset management system and the map report service and which: receives, via the input device, a user input for a query of one or more selected assets; determines, via the asset management system, respective locations for the one or more selected assets; and presents, via the output device, a map of the respective locations.

When introducing elements of aspects of the disclosure or the implementations thereof, the articles "a," "an," "the," and "said" are intended to mean that there are one or more of the elements. The terms "comprising," "including," and "having" are intended to be inclusive and mean that there could be additional elements other than the listed elements. The term "implementation" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. An information handling system (IHS) (100) comprising:
one or more radio frequency identification (RFID) sensors (152a) configured to be placed within a respective zone (208a,208b,208c), for each zone (208a,208b,208c), a RFID sensor (152a) configured to interrogate an RFID tag (154,182) and;
a network interface (148) communicatively connected over a network (150) to an asset tracking system;
a memory (112) that stores a location-based service (LBS) middleware application;
a controller (101) communicatively coupled to the RFID sensor (152a), the network interface (148), and the memory (112);
at least one hardware processor (176) that executes the LBS middleware application, causing the at least one hardware processor (176) to perform the following operations:
receiving (502) one or more RFID events from the RFID sensor (152a);
for each of the one or more RFID events:
determining (506) the RFID for a corresponding particular RFID tag (154, 182);
determining (508) one or more available sources of location data for the particular RFID tag (154,182) selected from a group comprising: location data included in RFID data; signal strength and direction data detected by a corresponding RFID sensor (152a); and information indicating a zone (208a,208b,208c) sensed by a corresponding RFID sensor (152a);
generates (510) a standardized RFID event including the one or more available sources of location data; and
based at least on the standardized RFID event, associating (516) the RFID and the one or more available sources of location data with a tracked asset.

2. The IHS of claim 1, wherein the RFID is a passive RFID tag, and wherein the IHS further comprises a second RFID sensor configured to wirelessly communicate with an active RFID tag that communicate using a wireless communication protocol, each RFID sensor comprising:
one or more RF antennas configured to receive RF signals within a respective zone; and
an RF frontend configured, via the one or more RF antennas, to perform one or more of the following: interrogate the passive RFID tags for RFID data, to wirelessly communicate with the active RFID tags to receive RFID data during an RFID event, and to relay the RFID data from the RFID event.

3. The IHS of claim 2, further comprising:
an edge server that generates the standardized RFID event; and
a cloud service communicatively coupled to the edge server, the cloud service configured to:
receive the standardized RFID event from the edge server; and
convert the one or more available sources of the location data into a standard spatial coordinate system in response to the one or more available sources of location data; and optionally wherein:
the standard spatial coordinate system comprises world geodetic system (WGS) 84;
the RFID sensor and the second RFID sensor are provided by one device; and
the wireless communication protocol comprises at least one of ultrawide band (UWB) and Bluetooth low energy (BLE).

4. The IHS of any preceding claim, wherein the controller parses the RFID event comprising a lightweight computer data interchange format for substrings that correspond to the RFID, the location of the particular RFID tag, and identifier for a corresponding RFID sensor.

5. The IHS of any preceding claim, further comprising:
an asset database that stores one or more records that correspond respectively to an asset, an RFID assigned to the asset, and a reported location for the asset;
a historian that stores and distributes one or more standardized events from one or more controllers;
a sensor location database that stores one or more records that correspond respectively to a particular RFID sensor and the respective zone of the particular RFID sensor;
a zone database that stores one or more records that correspond respectively to each zone and the respective set of standardized spatial coordinates for the zone; and
an asset management system that is communicatively coupled to the asset database, the historian, the sensor location database, and the zone database for associating the RFID and the location with the tracked asset.

6. The IHS of claim 5, wherein the asset management system:
identifies a particular zone as having a hazardous condition to humans;
identifies one or more RFIDs within the particular zone; and
generates a notification to one or more of an automated control system and a user interface device in response to determining that at least one RFID within the particular zone is associated with an asset that is human.

7. The IHS of claim 5, further comprising:
a map report service;
a user interface device having an input device and an output device and communicatively coupled to the asset management system and the map report service and which:
receives, via the input device, a user input for a query of one or more selected assets;
determines, via the asset management system, respective locations for the one or more selected assets; and
presents, via the output device, a map of the respective locations.

8. A method (500) comprising:
receiving (502), by a first radio frequency (RF) location sensor (206a) of one or more RFID sensors (206a, 206b, 206c), a first radio frequency identification (RFID) event from an RFID tag (214a, 214b, 218a, 218b) in response to RFID interrogation in a first zone (208a);
receiving (504), by a second RFID sensor (206b) of the one or more RFID sensors (206a, 206b, 206c), a second RFID event communicated within a second zone (208b) using a wireless communication protocol;
for each RFID event, determining (506) an RFID for a corresponding particular RFID tag (214a, 214b, 218a, 218b) of one of a passive RFID tag (214a,214b) and an active RFID tag (218a,218b);
determining (508) one or more available sources of location data for the particular RFID tag (214a, 214b, 218a, 218b) selected from a group comprising: location data included in the RFID data; signal strength and direction data detected by a corresponding RFID sensor (206a, 206b, 206c); and information indicating a zone (208a,208b,208c) sensed by a corresponding RFID sensor (206a, 206b, 206c);
generating (510) a standardized RFID event including the one or more available sources of location data; and
based at least on the standardized RFID event, associating (516) the RFID and the one or more available sources of location data with a tracked asset.

9. The method of claim 8, further comprising:
generating the standardized RFID event by an edge server;
communicating, by the edge server, the standardized RFID event to a cloud service; and
converting, by the cloud service, the one or more available sources of the location data into a standard spatial coordinate system.

10. The method of claim 9, wherein:
the standard spatial coordinate system comprises world geodetic system (WGS) 84;
the first RFID sensor and the second RFID sensor are provided by one device; and
the wireless communication protocol comprises at least one of ultrawide band (UWB) and Bluetooth low energy (BLE).

11. The method of any of claims 8 to 10, further comprising parsing the RFID event that comprises a lightweight computer data interchange format for substrings that correspond to the RFID, the location of the particular RFID tag, and identifier for a corresponding RFID sensor.

12. The method of any of claims 8 to 11, further comprising:
storing, in an asset database, one or more records that correspond respectively to an asset; an RFID assigned to the asset; and a reported location for the asset;
storing, in a historian, one or more standardized events from one or more controllers;
storing, in a sensor location database, one or more records that correspond respectively to a particular RFID sensor and the respective zone of the particular RFID sensor;
storing, in a zone database, one or more records that correspond respectively to each zone and the respective set of standardized spatial coordinates for the zone; and
associating the RFID and the location with a tracked asset by an asset management system that is communicatively coupled to the asset database, the historian, the sensor location database, and the zone database.

13. The method of claim 12, wherein associating the RFID and the location with the tracked asset further comprises:
identifying a particular zone as having a hazardous condition to humans;
identifying one or more RFIDs within the particular zone; and
generating a notification to one or more of an automated control system and a user interface device in response to determining that at least one of the one or more RFIDs with the particular zone is associated with an asset that is human.

14. The method of claim 12 or 13, further comprising:
receiving, via an input device, a user input for a query of one or more selected assets;
determining, via the asset management system, respective locations for the one or more selected assets; and
presenting, via an output device, a map of the respective locations.

15. Computer readable storage media comprising computer-executable instructions that, when executed by a processor (176), cause the processor (176) to perform the steps of any of claims 8 to 14.
